# EUROPEAN PATENT APPLICATION

(11) **EP 1 251 628 A2**
(43) Date of publication of application: **23.10.2002**
(21) Application number: 02008700.3
(22) Date of filing: 18.04.2002
(51) Int. Cl.: H02K 15/095

(54) **Stator pole winding method and apparatus**

(30) Priority: 19.04.2001 US 285064 P; 12.04.2002 US 122710
(71) Applicant: AXIS SpA, 50028 Tavarnelle Val di Pesa (Firenze) (IT)
(72) Inventor: Becherucci, Raffaele, Casignano, Scandicci, 50018 Firenze (IT); Stratico, Gianfranco, 53100 Siena (IT)
(74) Representative: Lotti, Giorgio

(57) **Abstract**

Apparatus and methods for winding wire around the poles and partly within the slots of dynamoelectric machine components, such as stators. Some stators are designed with poles having pole tips that extend relatively far in a peripheral direction, perhaps reaching nearly half way across the stator core. When the pole tips reach so far around the stator core and thus leave little room between opposing pole tips, it may be difficult to use winding technologies with needles that need to move between opposing pole tips. Therefore, stators may be divided into segments for the winding of each pole, and then reassembled to form a complete stator. The segments are wound by rotating the segment and a wire guide structure about an axis, while providing wire to the rotating apparatus from a wire source.

## Description

This application claims the benefit of U.S. provisional patent application No. 60/285,064, filed April 19, 2001, which is hereby incorporated by reference herein in its entirety.

### Background of the Invention

This invention relates to methods and apparatus for winding stators such as electric motor stators.

The present application concerns solutions for winding wire coils around poles and partly within slots that may be part of lamination cores of dynamoelectric machine components, such as stators. Some stators are designed with poles having pole tips that extend a relatively great distance in a peripheral direction, perhaps reaching nearly half way across the stator core. When the pole tips reach so far around the stator core, it can become difficult to use winding technologies like those described in Luciani et al. U.S. Patent No. 4,991,782, which is hereby incorporated by reference herein in its entirety. The tips of opposing poles may leave little room between one another for winding needles to access the slots.

Therefore, stators to be wound by this invention may be divided into separate pole portions, or segments, that need to be wound. Once the separate pole portions have been individually wound, they are joined together to form a single core. By dividing the stator into segments, the difficulty presented by the close proximity of opposing pole tips can be eliminated.

The solutions presented in this application include forming wire coils in stators of electric motors, and may further include termination of the coils' wire leads to anchoring points that are near, or directly on, the lamination core segment. By terminating one of the wire leads to the lamination core segment, wire is pulled from a source by rotating the lamination core segment. While rotating the lamination core segment, wire is wound around the pole. With the solutions presented in this application, the pole is wound by rotating the segment so that wire is drawn from a source and wound around the pole.

The segments to be wound in accordance with this invention are segments of a stator that has a central longitudinal axis spaced from the segment but substantially parallel to a longitudinal dimension of the segment. The segment includes first and second, substantially parallel, longitudinal slots on respective opposite sides of a longitudinal pole. The slots may have generally U-shaped cross sections that are inclined toward one another toward the bases of their U shapes. The segment is rotated about an axis substantially perpendicular to the central longitudinal axis. Because the openings of the U-shaped slots may not face in a radial direction with respect to the axis of rotation, it may be difficult to draw the wire into the slots as the segment is rotated without interference from other parts of the stator segment.

Therefore, it would be desirable to provide apparatus and methods for winding the poles of stators that have pole tips reaching far around the stator core. It would also be desirable to provide apparatus and methods for winding wire in slots having openings that do not face in a radial direction with respect to the axis of rotation.

### Summary of the Invention

It is an object of the invention to provide apparatus and methods for winding the poles of stators that have pole tips reaching relatively far around inside the stator core. When the stator is wound by rotating a segment of the stator, it is a further object of the invention to provide apparatus and methods for winding wire in slots having openings that do not face in a radial direction with respect to the axis of rotation.

In accordance with the principles of the invention, apparatus and methods for winding a coil of wire on a segment of a stator for a dynamoelectric machine are provided. After winding the segment, the segment is joined to at least one other stator segment to form an assembled stator. The stator typically has a central longitudinal axis spaced from the segment but substantially parallel to a longitudinal dimension of the segment. The segment includes at least first and second slots on respective opposite sides of a longitudinal pole. The first and second slots have openings for the passage of wire. Often, the slots are substantially parallel, longitudinal slots that may have generally U-shaped cross sections inclined toward one another toward the bases of their U shapes. The coil is wound around the pole and partly within the slots.

The apparatus includes a drive structure adapted to rotate the segment about a rotation axis that is substantially perpendicular to the longitudinal axis. The apparatus further includes a wire guide structure adapted for rotation with the segment. The apparatus still further includes a wire source that is located radially out from the wire guide structure but that does not rotate about the rotation axis. The wire source is provided with relative rotation on an orbit with respect to the segment as a result of the rotation of the segment about the rotation axis. The wire guide structure has surface portions that are shaped to guide wire at least between the orbit and the openings of the first and second slots. The winding alternates between the first and second slots, as the segment and the wire guide structure rotate about the rotation axis.

### Brief Description of the Drawings

Further features of the invention, its nature, and various advantages will be more apparent from the following detailed description and the accompanying drawings, wherein like reference characters represent like elements throughout, and in which:

FIG. 1 is an elevational view of a stator divided into two stator portions.

FIG. 2 is a perspective view of an illustrative embodiment of apparatus in accordance with the principles of the present invention. FIG. 2 and some subsequent FIGS. show some elements as though they were transparent so that other elements can be seen.

FIG. 3 is a partial elevational view of the apparatus shown in FIG. 2 taken from line 3-3 of FIG. 2.

FIG. 4 is a partial elevational view of the apparatus shown in FIGS. 2 and 3 taken from line 4-4 of FIG. 3.

FIG. 5 is an elevational view of the apparatus shown in FIGS. 2, 3 and 4, also showing an illustrative embodiment of additional components in accordance with the principles of the present invention.

FIG. 6 is an elevational view of a stator divided into two stator portions after being wound with wire in accordance with the principles of the present invention.

### Detailed Description

The invention provides apparatus and methods for winding a coil of wire on a segment of a stator for a dynamoelectric machine. The stator typically has a central longitudinal axis spaced from the segment but substantially parallel to a longitudinal dimension of the segment. The segment includes first and second, substantially parallel, longitudinal slots on respective opposite sides of a longitudinal pole. The slots may have generally U-shaped cross sections that are inclined toward one another toward the bases of their U shapes. The coil is wound around the pole and partly in the slots. The apparatus typically includes a drive structure adapted to rotate the segment about a rotation axis. The rotation axis is generally substantially perpendicular to the longitudinal axis.

The apparatus further typically includes a wire guide structure adapted for rotation with the segment. A wire source is located radially out from the wire guide structure, but does not rotate about the rotation axis, at least not all the way around the rotation axis. The wire guide structure has surface portions that are shaped to guide wire from the wire source to be wound around the pole. The winding of the wire alternates between the first and second slots, as the segment and the wire guide structure rotate about the rotation axis.

In some embodiments of the invention, the wire guide structure may include a first substructure adapted to hold the segment. While holding the segment, the first substructure preferably leaves the slots substantially unobstructed. The wire guide structure may include a second substructure spaced from the first substructure so that a passageway for wire is defined between the first and second substructures. In some embodiments, the wire guide structure or a part thereof may be configured to translate along the rotation axis (e.g., to facilitate insertion or removal of a segment relative to the wire guide structure).

In some embodiments, the wire source may be configured to move in a direction parallel to the rotation axis. This motion, in coordination with the rotation, may help properly distribute the wire around the pole. Altering the motion of the wire source may affect the distribution or density of the coil. Additionally, the distance of the wire source from the rotating apparatus may affect these characteristics of the wound coil. As still another example, some motion of the wire source about the rotation axis may be provided, but preferably the wire source does not move all the way around the rotation axis.

Because the slots of the segment typically do not open in a radial direction with respect to the axis of rotation, the wire guide structure generally has features that help guide the wire into the slots. These features may help properly distribute the wire within the slots, may help support the coil portion around ends of the poles (i.e., outside of the slots), and may prevent the wire from being caught on a portion of the segment other than within the slots or at the axial ends of the pole. In some embodiments, the wire guide structure may include wings configured to align the wire with an opening to each of the slots.

In some embodiments, the wire guide structure may include curved surfaces configured to draw the wire into each of the slots. In some embodiments, the wire guide structure may include a ridge configured to keep the wire raised and to draw the wire toward a surface of each of the slots which is radially outermost with respect to the longitudinal axis.

Some embodiments may include the wire guide structure having a support surface configured to support the wound wire at an end face of the pole. In some embodiments, the wire guide structure may include a wall configured to limit bulging of the wound wire at an end face of the pole. Any or all of the above features of the wire guide structure may improve the ability to wind wire on a segment having slots that do not open in a purely radial direction with respect to the axis of rotation.

In some embodiments, the wire guide structure may be configured to engage the pole. In some embodiments of the invention, the wire guide structure may be configured to clamp the segment. Some embodiments may include a wire guide structure configured to support the segment.

In some embodiments, the apparatus may include a pulley/belt transmission adapted to drive the rotation. In some embodiments of the invention, the apparatus may include a moveable support for the segment and the wire guide.

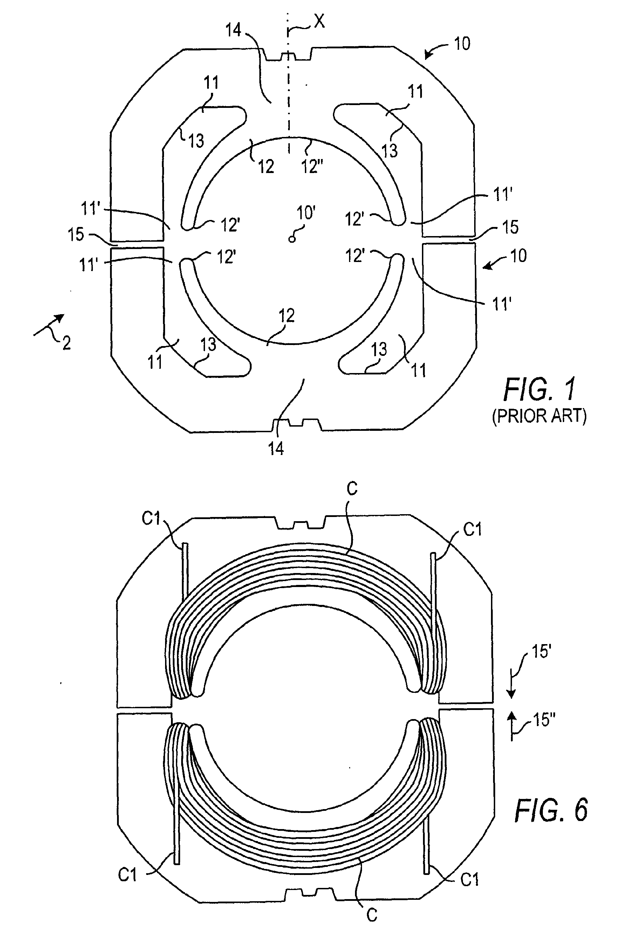

Illustrative examples of embodiments in accordance with the principles of the present invention are shown in FIGS. 1-6.

FIG. 1 is an end view of two separate pole portions or stator segments 10 that need to be wound with coils C (shown in FIG. 6) that may be at least partly seated in slots 11. FIG. 6 is a view similar to FIG. 1 showing coils C after they have been wound around poles 12 and seated in slots 11. Leads C1 may be anchored to terminal points (not shown). The terminal points could be on end face 10a and/or 10a' of stator segment 10. For example, the terminal points could be on terminal board structures on end faces 10a and/or 10a' of stator segment 10. Slots 11 may be delimited by curved poles 12 and inner surfaces 13 of the external core structure. Slots 11 occur on respective opposite sides of poles 12 and have openings 11' through which wire can be passed. Coils C wound around poles 12 may have wire turns that are wound around neck portions 14 and seated in slots 11.

After winding the coils, pole portions 10 may be joined by press fitting connections, or other joining solutions such as welding or external binding structures (e.g., an external ring). The portions may be joined in areas 15, to form a closed stator. Arrows 15' and 15" show directions of movement that may be used during a pressing operation to assemble pole portions 10 after they have been wound and terminated.

Pole tips 12' may extend substantially around central longitudinal axis 10' of the stator. This extension may create maximized spacing of slots 11 and may increase the field performance of the final stator. Consequently, a stator formed of pole portions like those shown in FIGS. 1 and 6 may have a higher number of turns wound within slots 11. In other words, the completed stator may be capable of producing a higher power output in relation to the stator's geometric size.

Bringing the pole tips 12' so far around central longitudinal axis 10' in a closed stator (i.e. a stator which is not divided like shown in FIGS. 1 and 6) may impede winding with needles that traverse the inside and outside of the stator, like those described in Luciani et al. U.S. patent No. 4,858,835. This impediment may be due primarily to the lack of space for moving the needles, especially between adjacent pole tips 12'. For this reason, the stator core may be divided into two portions like pole portions or stator segments 10 shown in FIGS. 1 and 6 so that access may be created for winding the poles.

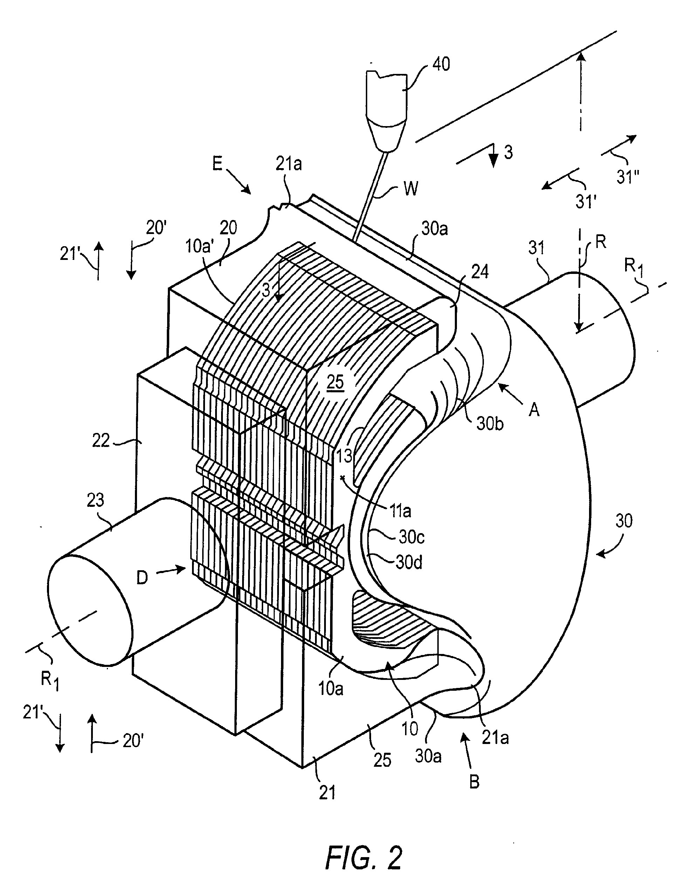

FIG. 2 is a perspective view showing apparatus that may be used to wind one of the separate pole portions or stator segments 10. Pole portion 10 in FIG. 2 is shown from direction 2 of FIG. 1. Pole portion 10 may be held by opposite clamp members 20 and 21 so that transverse axis X (FIG. 1) coincides with rotation axis R1. Transverse axis X (FIG. 1) may be an axis of symmetry for pole 12, passing through the center of pole portion 10.

Clamp members 20 and 21 may move towards each other, in directions 20', in order to clamp pole portion 10. Clamp members 20 and 21 may also move in directions 21' (i.e., away from each other) to release pole portion 10. Clamp members 20 and 21 may be mounted on slide unit 22 to enable these movements for holding or releasing pole portion 10. Slide unit 22 may be supported by shaft 23. Shaft 23 may be capable of rotation about axis R1. In this way, pole portion 10 may be rotated around axis R1 when held by clamp members 20 and 21. Clamp members 20 and 21 may engage the external portions of stator core segment 10. Clamp members 20 and 21 may extend to areas 15 (FIG. 1) and may have overhanging portions 24. Overhanging portions 24 may be configured such that the thickness of the core in areas 15 is totally covered.

Axial surfaces 25 of clamp members 20 and 21 may be flush with end faces 10a and 10a' of pole portion 10. Note that in FIG. 2 (and other FIGS.) certain parts have been shown partially transparent for the sake of clarity. This allows identification of parts and portions which are otherwise hidden.

Guide member 30 may be positioned opposite to clamp members 20 and 21. Guide member 30 may be capable of coming into contact with certain parts of pole portion 10 when the latter is held by clamp members 20 and 21. Once guide member 30 comes into contact with pole portion 10, guide portions 30 and pole portion 10 may rotate together around axis R1.

In order to enable the synchronous rotation, shaft 31 may be centered on axis R1 and may be capable of rotating around axis R1, when clamp members 20 and 21 rotate around axis R1. Guide member 30 may be flanged to shaft 31, so that guide member 30 is correctly located with respect to rotation axis R1. Guide member 30 may be capable of moving in direction 31'(i.e., parallel to axis R1) when required to bring guide member 30 into contact with pole portion 10. Movement of guide member 30 in direction 31", which is opposite to direction 31', may bring guide member 30 away from pole portion 10 and may create room for transfer of pole portion 10 to and from clamp members 20 and 21.

Guide member 30 may be recessed and may have portions that need to be positioned properly with respect to specific portions of pole portion 10, as will become clear in the following description. In some embodiments, pole portion 10 may have coil holders (not shown, but which may be conventional or substantially conventional). In embodiments having coil holders, guide member 30 may be recessed or otherwise shaped to accept the coil holder. In some embodiments not having coil holders, coils C may be bonded so that they remain in the proper position at the ends of poles 12.

Wire W is used to wind pole portion 10 and is delivered from a wire source, like nozzle 40. Nozzle 40 may be positioned at a distance R from rotation axis R1. Wire W may originate at a wire supply (not shown) and pass through a tensioner (not shown) before reaching nozzle 40. Distance R should be sufficient to avoid collision, during rotation around axis R1, between nozzle 40 and the outermost radial portions of the rotating structures. The outermost radial portions may be portions of winding guide 30, parts of pole portion 10, or portions of clamp members 20 and 21.

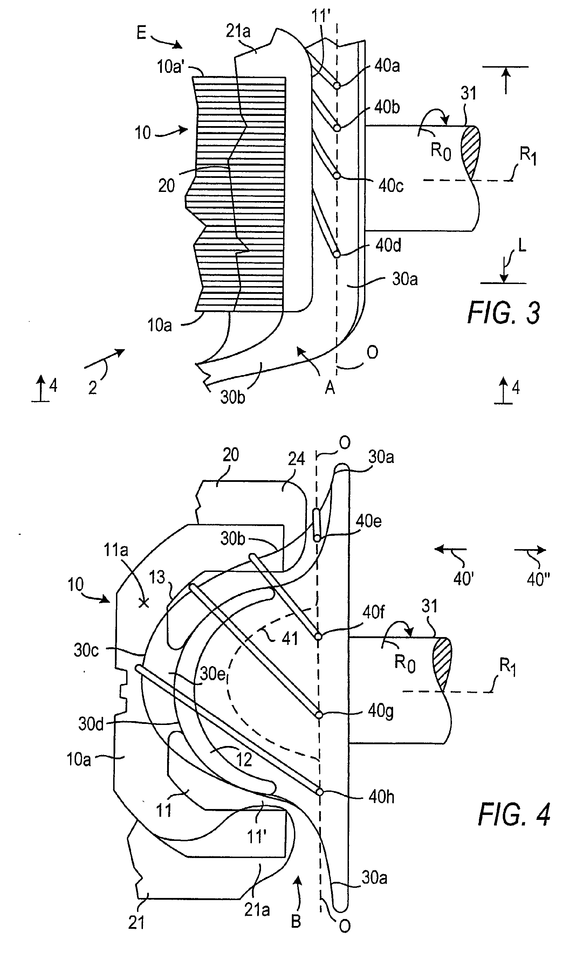

In some embodiments of the invention, nozzle 40 may be stationary. In such embodiments, nozzle 40 would appear to be orbiting the rotating segment and wire guide structure to an observer rotating with the segment and wire guide structure. Apparent orbit O of the stationary nozzle, as seen by such an observer, is shown in FIGS. 3 and 4. Representative successive positions of nozzle 40 along its apparent orbit O are denoted 40a-40h in FIGS. 3 and 4. In other embodiments of the invention, nozzle 40 may be configured to move. For example, path 41 shows the deviation of nozzle 40 from orbit O when nozzle 40 is configured to move in directions 40' and 40".

Wire W may be delivered for winding around pole portion 10 by anchoring its end to the face of the pole portion where termination occurs such that rotation of pole portion 10 pulls wire from nozzle 40.
Alternatively, the wire may be anchored to other rotating structures like clamp members 20 and 21. Once the wire end has been anchored, wire W is pulled out of nozzle 40 by rotation of pole portion 10 with guide member 30 around axis R1. The wire end may be anchored near the bottom of slots 11 (e.g., in position 11a of FIGS. 2 and 4), so that the wire tends to be drawn and laid towards the bottoms of slots 11 when rotation around axis R1 occurs.

Wire guide member 30 may have features that deviate wire W from orbit O to slot openings 11'. Nozzle 40 may be aligned with wings 30a of guide member 30 so that when pole portion 10 rotates with guide member 30, wire W runs along wing 30a to enter slots 11. This may be particularly useful in drawing wire W through opening 11' that extends along length L of pole portion 10 (see FIG. 3). FIGS. 3 and 4 show the wire stretching from opening 11' to nozzle 40 in various instances (denoted by 40a-40h) of the rotation around axis R1. In FIGS. 3 and 4, it appears that nozzle 40 is rotating around pole portion 10 and wire guide member 30. However, it is actually pole portion 10 and wire guide member 30 that are rotating. FIGS. 3 and 4 are illustrated this way for the sake of clarity and simplicity. FIGS. 3 and 4 show illustrative relative positions of nozzle 40 with respect to rotating pole portion 10 and wire guide member 30. The rotation direction of pole portion 10 with guide member 30 is indicated with reference letters RO. Wings 30a may lead to pole tips 12' and may be slanted to act as a continuation of pole structure 12. This helps ensure that wire W becomes aligned with slot openings 11'. This configuration may also assure that wire W runs smoothly through slot openings 11' to reach its resting location within slot 11. Overhang 24 of clamp member 20 may mask pole portion 10 in area 15 and may act as a guide surface to keep wire W aligned with opening 11'. When nozzle 40 is substantially aligned with end face 10a of pole portion 10 (see corner A), guide member 30 may present curved surface 30b that continues to draw wire W into slots 11, towards neck 14, and towards end face 10a of pole portion 10. Curved surface 30b may generally rise to ridge 30c (see also FIG. 4) that keeps wire W raised and draws it towards surface 13 of the external core structure surrounding slots 11.

This helps ensure that the wound coil will be sufficiently raised above pole 12. Ridge 30c may be above and in front of curved support surface 30d of winding guide 30 as viewed, for example, in FIG. 4. In other words, curved support surface 30d may be adjacent the axial end of pole 12, while ridge 30c is axially spaced from the axial end of the pole. Accordingly, support surface 30d can act as a support for the coil portion being formed around end face 10a of pole portion 10. Wall 30e extending from support surface 30d and up to ridge 30c may act as a front-containing surface to limit the external bulge of the coil from axial end 10a of the coil portion. Ridge 30c may reduce in height with respect to support surface 30d where the wire tends to enter opening 11' on the opposite side of pole 12 (see corner B in FIGS. 2 and 4). This may bring wire W towards opening 11' on the opposite side of pole 12, at corner B.

Inviting bulge 21a on clamp member 21 may assist in bringing wire W towards opening 11' on the opposite side of pole structure 12 at corner B. Without bulge 21a, wire W may miss opening 11' and be wound outside slots 11.

Nozzle 40 may be moved in direction 40' (i.e., parallel to axis R1 and towards pole structure 12) to assist in drawing wire W towards the bottom of slots 11, and towards surface 13 of the core structure.

Movement in reverse direction 40" may assist in bringing wire W towards opening 11' on the opposite side of pole structure 12 at corner B. An example of the relative movement of nozzle 40, which is the combined effect of nozzle 40 moving in directions 40' and 40" and pole portion 10 rotating about axis R1, is shown by dashed line 41. Thus, the movement of nozzle 40 may need to be synchronized with the rotation of pole portion 10 around axis R1. In other words, the axial position of nozzle 40 may be a predetermined function of the angular position reached by pole portion 10 around axis R1 during rotation.

In summary, portions 30b and 30c of guide member 30 are encountered when wire W leaves slot 11 and needs to be drawn around end face 10a. Other portions, like a final portion of ridge 30c and invitation bulge 21a are encountered by wire W when it needs to renter slot 11 on the opposite side of pole 12.

These specific portions are also typically present on opposite end face 10a' of pole portion 10 to provide similar functions when wire leaves and reenters the slots at opposite end face 10a'. Similarly, portions like 30b and 30c are typically present on guide member 30 in corner D at opposite end face 10a'. Furthermore, invitation bulge 21a is typically present in corner E at opposite end face 10a'. Portions like ridge 30c and support surface 30d may by located adjacent opposite end face 10a' by extending from corner D to corner E in a manner similar to that that has been described for corner A to corner B of end face 10a.

Wings like 30a may be present from corner B to corner D to keep the wire aligned with the slot openings on the opposite side of pole 12.

The internal structure of guide member 30 presents a seat configured to closely match the described portions and surfaces of guide member 30 with the surfaces of pole portion 10 that they need to be adjacent to. The curved underside of pole 12 may match the bottom of the cavity (see FIG. 4 in which pole 12 is shown in dashed line representation). The bottom of the cavity may mate with underside surface 12" of pole 12.

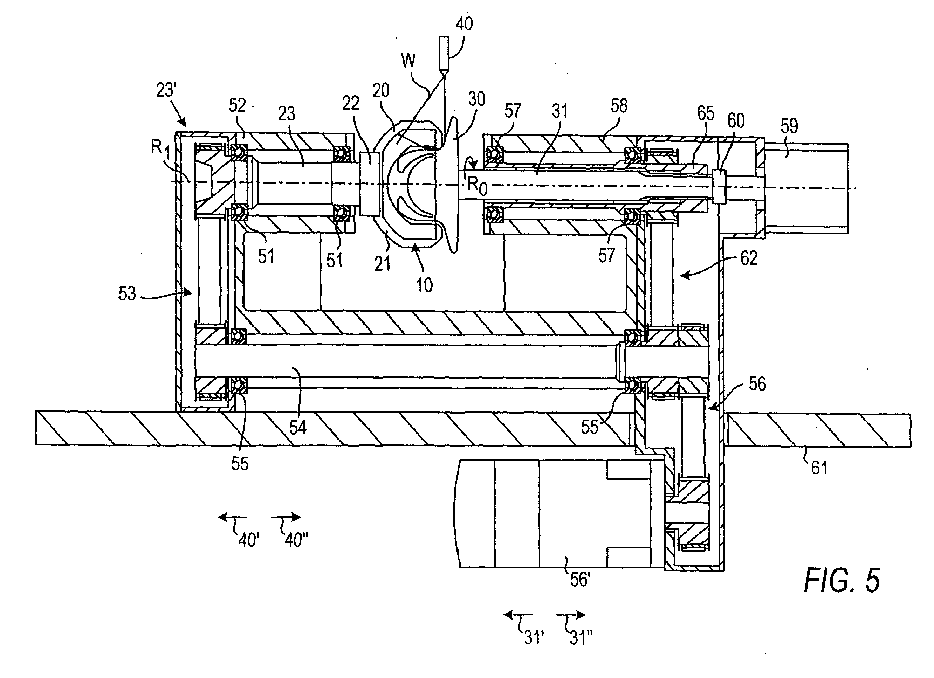

FIG. 5 is a view showing an illustrative embodiment of assembly units that can be used to rotate clamp members 20 and 21 and guide member 30 around axis R1. Shaft 23 carrying slide unit 22 is supported in bearings 51 of casing 52. End 23' of shaft 23 carries a pulley driven by pulley/belt transmission 53. Shaft 54 for driving pulley/belt transmission 53 is supported in bearings 55. Pulley/belt transmission 56 rotates shaft 54, thereby rotating shaft 23 around axis R1. Pulley/belt transmission 56 is driven by motor 56'.

Shaft 31 carrying guide member 30 is assembled in sleeve 65. Sleeve 65 is supported on bearings 57 of casing 58. Sleeve 65 is driven to rotate around axis R1 by pulley belt transmission 62, which is also connected to shaft 54 for obtaining rotation from motor 56'.
Shaft 31 has keys received in ways of sleeve 65 so that rotation imparted to sleeve 65 around axis R1 is also imparted to shaft 31. The keys of shaft 31, received in the ways of sleeve 65, allows shaft 31 to be moved in directions 31' and 31" (FIG. 2) mentioned in the foregoing. Linear actuator 59 is connected to shaft 31 through rotating coupling 60, to cause shaft 31 to move in directions 31' and 31".

Furthermore, support plate 61 may be moved in directions 40' and 40" (FIG. 4) mentioned above, as an alternative to moving nozzle 40.

The solution of rotating pole portion 10 with respect to nozzle 40 to wind coils C also may allow the winding of coils C with multiple wires. The various wires are drawn from respective nozzles, like nozzle 40, without the problem of twisting them around each other. This may facilitate separating the wires when required to accomplish termination with equipment like has been described in U.S. patent No. 5,193,755. Once the wires have been terminated, lead pulls or manipulation robots like those described in Luciani et al. U.S. patent No. 5,065,503 and Luciani et al. U.S. patent No. 5,245,748 may be used to anchor the leads C1 to required anchoring points.

The surfaces and portions of guide member 30 that have been described to draw wire W into slots 11 may need to be configured to suit the geometry of the stator that needs to be wound. It has been contemplated that some of the surfaces or portions may be omitted, and that others may be added depending on the geometry of the pole portion. It would be desirable for the wire to run smoothly from one surface to another of the guide member in order to possibly avoid jerks that may over-tension the wire. Regularity of the turn distribution and correct depositing of the coils' turns in wanted areas of slots 11, and also around end faces 10a and 10a' of pole portion 10, may depend on tailoring the surfaces and portions of guide member 30 to the geometry of pole portion 10 and the position of nozzle 40 with respect to pole portion 10 when it is rotating around axis R1. At certain times during the rotation of the stator segment 10 and elements 20, 21, and 30, the wire going from nozzle 40 to stator segment 10 may contact and thus be guided by portions of elements 20 and 21. These elements may therefore be referred to as part of the wire guide structure of the apparatus. In other words, elements 20 and 21 may constitute a substructure of the wire guide structure. Element 30 may constitute another substructure of the wire guide structure.

Thus it is seen that apparatus and methods for winding the poles of stators that have pole tips reaching far around the stator core have been provided. Apparatus and methods for winding wire in slots having openings that do not face a purely radial direction with respect to the axis of rotation when the stator is wound by rotating a segment of the stator have been provided. One skilled in the art will appreciate that the present invention can be practiced by other than the described embodiments, which are presented for purposes of illustration and not of limitation, and the present invention is limited only by the claims which follow.

## Claims

1. Apparatus for winding a coil of wire on a segment of a stator for a dynamoelectric machine, which stator segment is joined to at least one other stator segment after winding to form an assembled stator, the segment including at least first and second slots on respective opposite sides of a pole portion of the segment and the at least first and second slots having openings for passage of wire into the at least first and second slots during winding to wind at least a portion of the coil around the pole portion, the apparatus comprising:
a drive structure adapted to rotate the segment about a rotation axis during winding of the at least a portion of the coil;
a wire source that is located radially out from the rotation axis so that the wire source is provided with relative rotation on an orbit with respect to the segment as a result of the rotation of the segment about the rotation axis; and
a wire guide structure having surface portions for guiding the wire at least between the orbit and the openings of the at least first and second slots.

2. The apparatus defined in claim 1 wherein the wire guide structure comprises a guide portion adapted for rotation with the segment.

3. The apparatus defined in claim 2 wherein the guide portion is configured to remain located adjacent and interior to a portion of the segment during rotation of the segment, the guide portion drawing the wire into the at least first and second slots.

4. The apparatus defined in claim 1 wherein the stator has a central longitudinal axis spaced from the segment but substantially parallel to a longitudinal dimension of the segment.

5. The apparatus defined in claim 1 wherein the at least first and second slots are substantially parallel, longitudinal slots on respective opposite sides of a longitudinal pole, the slots having generally U-shaped cross sections and being inclined toward one another toward the bases of their U shapes.

6. The apparatus defined in claim 4 wherein the rotation axis is substantially perpendicular to the longitudinal axis.

7. The apparatus defined in claim 1 wherein the wire guide structure comprises:
a first substructure adapted to hold the segment, while leaving the at least first and second slots substantially unobstructed; and
a second substructure spaced from the first substructure so that a passageway for wire is defined between the first and second substructures.

8. The apparatus defined in claim 1 wherein the wire guide structure is further configured to translate along the rotation axis.

9. The apparatus defined in claim 1 wherein the wire source is configured to move in a direction parallel to the rotation axis.

10. The apparatus defined in claim 1 wherein the wire guide structure comprises wings configured to align the wire with the openings of the at least first and second slots.

11. The apparatus defined in claim 1 wherein the wire guide structure comprises curved surfaces configured to draw the wire into the at least first and second slots.

12. The apparatus defined in claim 1 wherein the wire guide structure comprises a ridge configured to keep the wire raised and to draw the wire toward surfaces of the at least first and second slots which are radially outermost with respect to a central longitudinal axis of the segment.

13. The apparatus defined in claim 1 wherein the wire guide structure comprises a support surface configured to support the wound wire at an end face of the pole.

14. The apparatus defined in claim 1 wherein the wire guide structure comprises a wall configured to limit bulging of the wound wire at an end face of the pole.

15. The apparatus defined in claim 1 wherein the wire guide structure is configured to engage the pole.

16. The apparatus defined in claim 1 wherein the wire guide structure is configured to clamp the segment.

17. The apparatus defined in claim 1 wherein the wire guide structure supports the segment.

18. The apparatus defined in claim 1 further comprising a pulley/belt transmission adapted to drive the rotation.

19. The apparatus defined in claim 1 further comprising a moveable support for the segment and the wire guide.

20. The apparatus defined in claim 1 wherein the wire source is positioned at a distance from the rotation axis wherein the distribution of the wire within the at least first and second slots is altered by the positioning of the wire source.

21. The apparatus defined in claim 1 wherein the wire guide structure deviates the wire from the orbit toward the openings of the at least first and second slots.

22. A method for winding a coil of wire on a segment of a stator for a dynamoelectric machine, which stator segment is joined to at least one other stator segment after winding to form an assembled stator, the segment including at least first and second slots on respective opposite sides of a pole portion of the segment and the at least first and second slots having openings for passage of wire into the at least first and second slots during winding to wind at least a portion of the coil around the pole portion, the method comprising:
rotating the segment about a rotation axis that is substantially perpendicular to a central longitudinal axis of the stator;
rotating a wire guide structure about the rotation axis; and
delivering the wire from a wire source that does not rotate about the rotation axis.

23. The method defined in claim 22 further comprising clamping the segment in the wire guide structure.

24. The method defined in claim 22 further comprising engaging the pole with the wire guide structure.

25. The method defined in claim 22 further comprising moving the wire source along a path.
